# EUROPEAN PATENT SPECIFICATION

(11) **EP 2 649 786 B1**
(45) Date of publication and mention of the grant of the patent: **30.12.2020**
(21) Application number: 11846302.5
(22) Date of filing: 14.11.2011
(51) Int. Cl.: H04N 5/225, G03B 3/02, G03B 3/10, G03B 13/36

(54) **CAMERA MODULE**
KAMERAMODUL
MODULE DE CAMÉRA

(30) Priority: 09.12.2010 KR 20100125731; 13.12.2010 KR 20100127053
(43) Date of publication of application: 16.10.2013
(60) Divisional application: 20206217.0
(73) Proprietor: LG Innotek Co., Ltd., Seoul, 04637 (KR)
(72) Inventor: LEE, Jungsik, Seoul 100-714 (KR)
(74) Representative: M. Zardi & Co S.A.
(86) International application number: PCT/KR2011/008648
(87) International publication number: WO 2012/077915

(56) References cited:
- EP-A1- 2 077 460
- EP-A2- 2 124 431
- CN-A- 101 509 996
- KR-A- 20070 109 475
- KR-A- 20080 048 113
- KR-B1- 100 801 642
- KR-B1- 100 818 880

## Description

### [Technical Field]

The teachings in accordance with exemplary embodiments of this invention relate generally to a camera module, and more particularly to a camera module configured to have a tolerance to an electrostatic damage.

### [Background Art]

Generally, a compact small-sized camera module is applied to various multimedia fields including notebook type personal computers, camera phones, PDAs (Personal Digital Assistants), smart phones and toys, and to image input equipment including monitoring cameras and information terminals.

A PCB (Printed Circuit Board) of a camera module is manufactured being embedded with various electronic elements, and the electronic elements are generally configured with integrated modules on the PCB. The integrated module used for mobile terminals is exposed to severe radio interference, which in turn results in abnormal function to the electronic elements forming the integrated module.

Under the circumstance where the radio interference causes an abnormal function to the electronic elements forming the integrated module, a metal shield can is generally utilized to prevent the radio interference. The metal shield serves to alleviate the radio interference ill affecting the electronic elements and to protect the electronic elements against an outside shock.

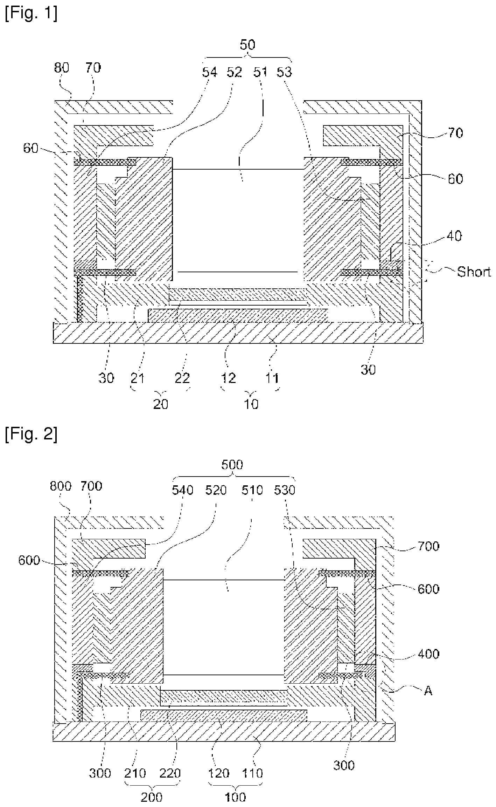

FIG.1 is a schematic view for explaining a problem faced by a conventional camera module. Referring to FIG.1, the conventional camera module includes a PCB (11) mounted with an image sensor (12), a base (20) on the PCB (11), upper and lower spring plates (30, 60), a spacer (40), a cover (70), a lens assembly and a lens actuator (50) and a shield can (80).

The lower spring plate (30) in the conventional camera module that is electrically connected to the PCB (11) forms a layer and may be protruded to outside. The shield can (80) is generally provided with a conductive metal material, such that the lower spring plate (30) and the shield can (80) may be short-circuited, as illustrated in FIG.1. Furthermore, a short-circuit may be generated between the lower spring plate (30) and a conductive structure even in a camera module free from the shield can (80), if the structure assembled for the camera module is configured with conductive materials.

Further examples of camera modules according to the prior art are known from EP2124431 and EP 2077460.

### [Disclosure]

### [Technical Problem]

The present invention is to provide a camera module directed to solve the aforementioned problems or disadvantages by preventing the camera module from being short-circuited with outside conductive materials.

Technical problems to be solved by the present invention are not restricted to the above-mentioned, and any other technical problems not mentioned so far will be clearly appreciated from the following description by skilled in the art.

### [Solution to Probelem]

An object of the invention is to solve at least one or more of the above problems and/or disadvantages in whole or in part and to provide at least the advantages described hereinafter. In order to achieve at least the above objects, in whole or in part, in accordance with the present invention, there is provided a camera module as recited in claim 1; further embodiments of the present invention are defined in the dependent claims.

As disclosed, there is provided a camera module, the camera module comprising: a PCB; an image sensor mounted on the PCB and with an image pickup device; a base mounted on the PCB and including a plated portion formed at a lower center with an opening mounted with an IR (infrared) filter, and accommodated with a connection lead therein, and corner pillar portions each erected at a corner portion of the plated portion; a lower spring plate formed with a conductive material, and connected to the connection lead of the base for coupling with an upper surface of the plated portion; a spacer arranged on an upper surface of the lower spring plate and forming a staircase structure by a rib wrapping a periphery of the lower spring plate to supportively apply a pressure to the lower spring plate; a lens actuator including a bobbin elastically supported by the lower spring plate and accommodated inside a lens assembly, and a yoke wrapping the bobbin and coupled among the corner pillar portions of the base and stacked at an upper surface of the spacer; an upper spring plate coupled to an upper surface of the lens actuator to supportively apply a pressure to the lens actuator; and a cover attached to an upper surface of the upper spring plate and formed thereon with a hole.

According to the present invention, the camera module is further comprising a shield can of an enclosure formed thereon with a hole and a bottom-opened inner space, accommodating the lens actuator at the inner space, and secured at a bottom end to an upper surface of the PCB.

Preferably, the shield can and the PCB are fixed by an adhesive.

Preferably, the adhesive is a conductive epoxy.

Preferably, the lower spring plate is formed with an upwardly-protruding yoke terminal to supply an electric power to the lens actuator.

In another general aspect as disclosed, there is provide a camera module, the camera module comprising: a PCB; an image sensor mounted on the PCB and formed with an image pickup device; a base mounted on the PCB and including a plated portion formed at a lower center with an opening mounted with an IR (infrared) filter, and corner pillar portions each erected at a corner portion of the plated portion; a lower spring plate formed with a conductive material, and coupled to an upper surface of the plated portion of the base; a lens actuator including a bobbin elastically supported by the lower spring plate and accommodated inside a lens assembly, and a yoke wrapping the bobbin and coupled to an upper surface of the base; an upper spring plate coupled to an upper surface of the lens actuator to supportively apply a pressure to the lens actuator; and a cover arranged on an upper surface of the upper spring plate, coupled to a corner pillar portion of the base and formed thereon with a hole, wherein an upper surface of the plated portion of the base is formed with an accommodation structure inwardly staircased for accommodating the lower spring plate.

The camera module is further comprising a shield can of an enclosure formed thereon with a hole and a bottom-opened inner space, accommodating the lens actuator at the inner space, and secured at a bottom end to an upper surface of the PCB.

Preferably, the shield can and the PCB are fixed by an adhesive.

Preferably, the adhesive is a conductive epoxy.

Preferably, the camera module is further comprising a spacer between the lower spring plate and the lens actuator.

Preferably, the lower spring plate is formed with an upwardly-protruding yoke terminal to supply an electric power to the lens actuator.

### [Advantageous Effects of Invention]

A camera module according to the present invention has an advantageous effect in that an occurrence of short-circuit with outside conductive material is prevented to alleviate damage to the camera module caused by short-circuit through structural change to a spacer, thereby dispensing with formation of additional parts.

### [Brief Description of Drawings]

The teachings of the present invention can be readily understood by considering the following detailed description in conjunction with the accompanying drawings, in which:
FIG. 1 is a cross-sectional explaining a problem of a conventional camera module;
FIG. 2 is a cross-sectional view of a camera module according to a first exemplary embodiment of the present invention;
FIG. 3 is a schematic view illustrating a coupled state between a staircase-formed spacer and a lower spring plate;
FIG. 4 is a schematic view illustrating a coupled state between a staircase-formed base of a camera module and a lower spring plate according to a second exemplary as disclosed; and
FIG. 5 is a schematic view illustrating the lower spring plate of FIGS. 3 and 4.

### [Best Mode for Carrying out the Invention]

The following description is not intended to limit the invention to the form disclosed herein. Consequently, the scope of the present invention is defined by the claims. The embodiments described herein are further intended to explain modes known of practicing the invention and to enable others skilled in the art to utilize the invention in such, or other embodiments and with various modifications required by the particular application(s) or use(s) of the present invention.

The disclosed embodiments and advantages thereof are best understood by referring to FIGS. 1-5 of the drawings, like numerals being used for like and corresponding parts of the various drawings. Other features and advantages of the disclosed embodiments will be or will become apparent to one of ordinary skill in the art upon examination of the following figures and detailed description. It is intended that all such additional features and advantages be included within the scope of the disclosed embodiments, and protected by the accompanying drawings. Further, the illustrated figures are only exemplary and not intended to assert or imply any limitation with regard to the environment, architecture, or process in which different embodiments may be implemented. Accordingly, the described aspect is intended to embrace all such alterations, modifications, and variations that fall within the scope and novel idea of the present invention.

It will be understood that the terms "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. That is, the terms "including", "includes", "having", "has", "with", or variants thereof are used in the detailed description and/or the claims to denote non-exhaustive inclusion in a manner similar to the term "comprising".

Furthermore, "exemplary" is merely meant to mean an example, rather than the best. It is also to be appreciated that features, layers and/or elements depicted herein are illustrated with particular dimensions and/or orientations relative to one another for purposes of simplicity and ease of understanding, and that the actual dimensions and/or orientations may differ substantially from that illustrated. That is, in the drawings, the size and relative sizes of layers, regions and/or other elements may be exaggerated or reduced for clarity. Like numbers refer to like elements throughout and explanations that duplicate one another will be omitted. Now, the present invention will be described in detail with reference to the accompanying drawings.

Words such as "thereafter," "then," "next," etc. are not intended to limit the order of the processes; these words are simply used to guide the reader through the description of the methods.

It will be understood that when an element is referred to as being "connected" or "coupled" to another element, it can be directly connected or coupled to the other elements or intervening elements may be present. In contrast, when an element is referred to as being "directly connected" or "directly coupled" to another element, there are no intervening elements present. As used herein, the term "and/or" includes any and all combinations of one or more of the associated listed items and may be abbreviated as "/".

It will be understood that, although the terms first, second, etc. may be used herein to describe various elements, these elements should not be limited by these terms. These terms are only used to distinguish one element from another. For example, a first region/layer could be termed a second region/layer, and, similarly, a second region/layer could be termed a first region/layer without departing from the teachings of the disclosure.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise.

Now, the camera module according to exemplary embodiments of the present invention will be described in detail with reference to the accompanying drawings.

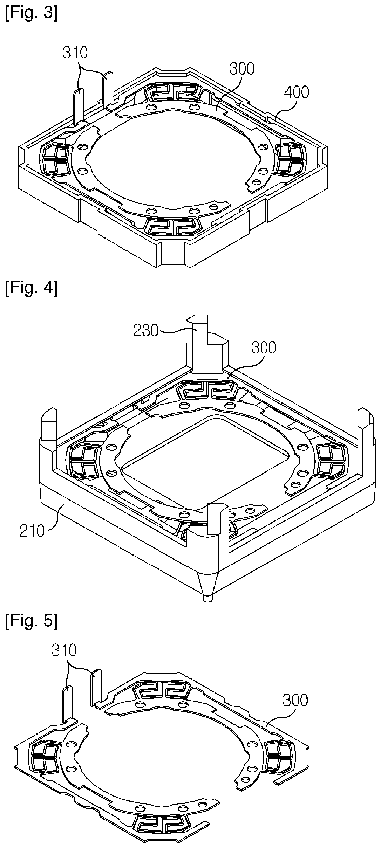

FIG.2 is a cross-sectional view of a camera module according to a first exemplary embodiment of the present invention, FIG. 3 is a schematic view illustrating a coupled state between a staircase-formed spacer and a lower spring plate, FIG.4 is a schematic view illustrating a coupled state between a staircase-formed base of a camera module and a lower spring plate according to a second exemplary embodiment of the present invention, and FIG. 5 is a schematic view illustrating the lower spring plate of FIGS. 3 and 4.

Referring to FIG.2, a camera module according to a first exemplary embodiment of the present invention includes a PCB (110), an image sensor (120), a base (200), upper and lower spring plates (300, 600), a spacer (400), a lens assembly and a lens actuator (500), a cover (700), and a shield can (800).

The PCB (110) is mounted with the image sensor (120), and coupled to the base (200) and a lower surface of the can (800). The image sensor (120) is mounted with an image pickup device for converting light incident through a lens formed at a lens assembly (510) positioned at an upper surface of the image sensor (120) to an electrical signal.

The base (200) mounted on the PCB (110) is formed at a lower center thereof with an opening mounted with an IR filter (220) filtering an infrared, and includes a plated portion accommodating a connection lead, and a corner pillar portion (230) perpendicularly formed at a corner portion of the plated portion. The lower spring plate (300) formed with a conductive material is connected to a connection lead of the base (200) and coupled to an upper surface of the plated portion.

The spacer (400) is arranged at an upper surface of the lower spring plate (300), formed with a stair-cased structure by a rib encompassing a periphery of the lower spring plate (300) to supportively apply a pressure to the lower spring plate (300). The conductive lower spring plate (300) is accommodated by the stair-cased structure formed by the rib (see 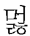 ?in FIG. 2) to prevent the conductive material from being exposed to an external surface of the spacer (400), whereby the lower spring plate (300) and an outside conductive material from being short-circuited. The difference created by the structure can be more distinctively shown in comparison with the prior art of FIG.1. In case of structure of FIG.1, a periphery of the lower spring plate (30) is structurally exposed to an external surface of the spacer (40), the structure of which can generate an occurrence of short-circuit with an outside conductive material, whereas the rib structure of spacer (400) according to the present invention has an effect of completely removing the occurrence of short-circuit.

Now, referring to FIGS. 2 and 3, the lower spring plate (300) is formed with an upwardly protruding yoke terminal (310). The yoke terminal (310) is inserted into a connection hole of a yoke (540) at the lens actuator (500), and the lower spring plate (300) is electrically connected to the PCB (110) through a connection lead inside the base (210) to allow the lens actuator (500) to be provided with an electric power.

The lens actuator (500) includes a lens assembly (510), a bobbin (520) accommodating the lens assembly (510), a coil wound on a periphery of the bobbin (520) and the yoke (540), which are elements for vertically driving the lens assembly (510). The upper spring plate (600) is coupled to an upper surface of the lens actuator (500) to supportively apply a pressure to the lens actuator (500). The cover (700) is attached to an upper surface of the upper spring plate (600) and is formed at an upper center thereof with a center hole.

The shield can (800), an enclosure formed at a upper center thereof with a hole and a bottom-opened inner space, accommodates the lens actuator (500) at the inner space, and fixed at a bottom end to an upper surface of the PCB (110) by an adhesive. The adhesive may include a conductive epoxy, but is not limited thereto.

### [Mode for Invention]

FIG.4 is a schematic view illustrating a coupled state between a staircase-formed base of a camera module and a lower spring plate according to a second exemplary embodiment of the present invention, and FIG. 5 is a schematic view illustrating the lower spring plate formed with an upwardly protruding yoke terminal according to another exemplary embodiment of the present invention.

An upper surface of a plated portion of a base (210) according to another exemplary embodiment of the present invention is formed with an accommodation structure inwardly formed with staircases to accommodate the lower spring plate (300) (see 'A' of FIG.2). In a case the lower spring plate (300) is accommodated in the accommodation structure, the conductive lower spring plate (300) is accommodated by the staircases at an upper surface of the plated portion of the base (210) to structurally prevent from exposing to an external surface of the base (210), whereby the lower spring plate (300) is prevented from being short-circuited with an external conductive material.

The difference created by the structure can be more distinctively shown in comparison with the prior art of FIG.1. In case of structure of FIG.2, a periphery of the lower spring plate (30) is structurally exposed to an external surface of the base (21), the structure of which can generate an occurrence of short-circuit with an outside conductive material, whereas the inwardly staircased accommodation structure according to the present invention has an effect of completely removing the occurrence of short-circuit.

Now, referring to FIG. 5, the lower spring plate (300) is formed with an upwardly protruding yoke terminal (310). The yoke terminal (310) is inserted into a connection hole of a yoke (540) at the lens actuator (500), and the lower spring plate (300) is electrically connected to a circuit of the PCB (110) to allow the lens actuator (500) to be provided with an electric power.

That is, the second exemplary embodiment as disclosed is comprising a stair-cased structure formed at the base (210), and other structures make no big difference from those of the first exemplary embodiment, such that an overlapped explanation is omitted.

The previous description of the present invention is provided to enable any person skilled in the art to make or use the invention, wherein the scope of the present invention is defined by the claims.

### [Industrial Applicability]

The camera module according to the present invention has an industrial applicability in that the novel idea of the present invention can be applied to a small-sized camera module using a voice coil motor as an automatic focus adjusting unit.

## Claims

1. A camera module comprising:
a Printed Circuit Board, PCB, (110);
an image sensor (120) mounted on the PCB and with an image pickup device;
a base (210) mounted on the PCB (110) and including a plated portion formed at a lower center with an opening mounted with an Infrared, IR, filter, and accommodated with a connection lead therein and corner pillar portions each erected at a corner portion of the plated portion;
a lower spring plate (300) formed with a conductive material and connected to the connection lead of the base (210) for coupling with an upper surface of the plated portion and through the connection lead connected to the PCB to allow a lens actuator (500) to be provided with electrical power;
a spacer (400) arranged on an upper surface of the lower spring plate (300) and forming a staircase structure by a rib wrapping a periphery of the lower spring plate (300) to supportively apply a pressure to the lower spring plate (300);
the lens actuator (500) including a lens assembly (510), a bobbin (520) elastically supported by the lower spring plate (300) and accommodated inside the lens assembly (510), and a yoke (540) wrapping the bobbin (520) and coupled among the corner pillar portions of the base (210) and stacked at an upper surface of the spacer; an upper spring plate (600) coupled to an upper surface of the lens actuator (500); and
a cover (700) attached to an upper surface of the upper spring plate (600) and formed thereon with a hole, the camera module further comprising a shield can (800) of an enclosure formed thereon with a hole and a bottom-opened inner space, accommodating the lens actuator (500) at the inner space, and secured at a bottom end to an upper surface of the PCB (110).

2. The camera module of claim 1, wherein the shield can (800) and the PCB (110) are fixed by an adhesive.

3. The camera module of claim 2, wherein the adhesive is a conductive epoxy.

4. The camera module of claim 1, wherein the lower spring plate (110) is formed with an upwardly-protruding yoke terminal to supply an electric power to the lens actuator (500).

## Patentansprüche

1. Kameramodul umfassend:
eine Leiterplatte (Printed Circuit Board), PCB, (110);
einen Bildsensor (120), der auf der PCB angebracht ist und eine Bildaufnahmevorrichtung aufweist;
eine Basis (210), die auf der PCB (110) angebracht ist und einen plattierten Abschnitt, der an einer unteren Mitte mit einer Öffnung ausgebildet ist, die mit einem Infrarot-, IR-, Filter angebracht ist und in der eine Verbindungsleitung aufgenommen ist, und Ecksäulenabschnitte umfasst, die jeweils an einem Eckabschnitt des plattierten Abschnitts aufgestellt sind;
eine untere Federplatte (300), die mit einem leitenden Material ausgebildet ist und mit der Verbindungsleitung der Basis (210) zum Koppeln mit einer oberen Oberfläche des plattierten Abschnitts verbunden ist und durch die Verbindungsleitung mit der PCB verbunden ist, um die Versorgung eines Linsenaktuators (500) mit elektrischer Leistung zu erlauben;
einen Abstandshalter (400), der auf einer oberen Oberfläche der unteren Federplatte (300) angeordnet ist und eine Treppenstruktur durch eine Rippe bildet, die einen Umfang der unteren Federplatte (300) umhüllt, um unterstützend einen Druck auf die untere Federplatte (300) auszuüben;
den Linsenaktuator (500), der eine Linsenanordnung (510), einen Spulenkörper (520), der durch die untere Federplatte (300) elastisch gehalten und innerhalb der Linsenanordnung (510) aufgenommen ist, und ein Joch (540) umfasst, das den Spulenkörper (520) umhüllt und zwischen den Ecksäulenabschnitten der Basis (210) gekoppelt und an einer oberen Oberfläche des Abstandshalters gestapelt ist;
eine obere Federplatte (600), die mit einer oberen Oberfläche des Linsenaktuators (500) gekoppelt ist; und
eine Abdeckung (700), die an einer oberen Oberfläche der oberen Federplatte (600) befestigt und darauf mit einem Loch ausgebildet ist,
wobei das Kameramodul ferner eine Abschirmdose (800) eines darauf ausgebildeten Gehäuses mit einem Loch und einem nach unten offenen Innenraum umfasst, die den Linsenaktuator (500) im Innenraum aufnimmt und an einem unteren Ende an einer oberen Oberfläche der PCB (110) festgelegt ist.

2. Kameramodul nach Anspruch 1, wobei die Abschirmdose (800) und die PCB (110) durch einen Klebstoff fixiert sind.

3. Kameramodul nach Anspruch 2, wobei der Klebstoff ein leitendes Epoxid ist.

4. Kameramodul nach Anspruch 1, wobei die untere Federplatte (110) mit einem nach oben herausragenden Jochanschluss ausgebildet ist, um den Linsenaktuator (500) mit elektrischer Leistung zu versorgen.

## Revendications

1. Un module formant appareil de prise de vues, comprenant :
une carte à circuit imprimé, en abrégé PCB, (110) ;
un capteur d'image (120) monté sur la PCB et avec un dispositif de prise d'image ;
une base (210) montée sur la PCB (110) et comprenant une partie plaquée ayant une ouverture formée au niveau d'un centre inférieur, dans laquelle est monté un filtre infrarouge, en abrégé IR, et recevant en elle un fil de connexion et des parties de pilier d'angle, chacun érigé en une partie d'angle de la partie plaquée ;
une plaque à ressort inférieure (300) formée avec un matériau conducteur et connectée au fil de connexion de la base (210) pour une liaison avec une surface supérieure de la partie plaquée et au moyen du fil de connexion connecté à la PCB pour permettre à un actionneur d'objectif (500) d'être alimenté en énergie électrique ;
une entretoise (400) agencée sur une surface supérieure de la plaque à ressort inférieure (300) et formant une structure en escalier par une nervure enveloppant une périphérie de la plaque à ressort inférieure (300) pour appliquer de manière supportée une pression à la plaque à ressort inférieure (300) ;
l'actionneur d'objectif (500) comprenant un ensemble formant objectif (510), une bobine (520) supportée élastiquement par la plaque à ressort inférieure (300) et logée à l'intérieur de l'ensemble formant objectif (510), et un étrier (540) enveloppant la bobine (520) et relié entre les parties de pilier d'angle de la base (210) et empilé sur une surface supérieure de l'entretoise ; une plaque à ressort supérieure (600) étant reliée à une surface supérieure de l'actionneur d'objectif (500) ; et
un couvercle (700) fixé à une surface supérieure de la plaque à ressort supérieure (600) et formé sur celle-ci avec un trou, le module d'appareil de prise de vues comprenant en outre un boîtier de protection (800) d'une enceinte ayant, formé sur elle, un trou et ayant un espace intérieur ouvert par le bas, logeant l'actionneur d'objectif (500) au niveau de l'espace intérieur, et fixé au niveau d'une extrémité inférieure à une surface supérieure de la PCB (110).

2. Le module formant appareil de prise de vues selon la revendication 1, dans lequel le boîtier de protection (800) et la PCB (110) sont fixés par un adhésif.

3. Le module formant appareil de prise de vues selon la revendication 2, dans lequel l'adhésif est un époxy conducteur.

4. Le module formant appareil de prise de vues selon la revendication 1, dans lequel la plaque à ressort inférieure (110) est formée avec une borne d'étrier faisant saillie vers le haut pour fournir une énergie électrique à l'actionneur d'objectif (500).
